Europäisches Patentamt

European Patent Office

Office européen des brevets

(19)

(11) Publication number: **0 269 423**
**A2**

# EUROPEAN PATENT APPLICATION

(21) Application number: **87310380.8**

(22) Date of filing: **25.11.87**

(51) Int. Cl.⁴: **H 04 L 11/16**

(30) Priority: **25.11.86 AU 9141/86**

(43) Date of publication of application:
**01.06.88 Bulletin 88/22**

(84) Designated Contracting States:
**AT BE CH DE ES FR GB GR IT LI LU NL SE**

(71) Applicant: **TYTEL PTY LIMITED**
**74 Whiting Street**
**Artarmon New South Wales 2064 (AU)**

(72) Inventor: **Thomson, Stephen Arthur**
**3 Lough Avenue**
**Guildford New South Wales 2161 (AU)**

(74) Representative: **Alexander, Thomas Bruce et al**
**Boult, Wade & Tennant 27 Furnival Street**
**London EC4A 1PQ (GB)**

(54) Local area network exchange.

(57) The present invention discloses a local area network exchange (LANX) able to operate with a single pair of twisted wires (1) to transmit both data and/or voice information. A contention mechanism to enable the devices (nodes) connected to the network to gain access to the network without disrupting existing users is disclosed. Finally, a system of group synchronisation of the various nodes is also disclosed which results in all active nodes operating at the rate of the fastest node internal clock or oscillator. If desired the single pair of wires can be branched by means of a splitter (6) or connected to like network(s) via a gateway device (2).

FIG. 1

EP 0 269 423 A2

### Description

## LOCAL AREA NETWORK EXCHANGE

The present invention relates to a local area network exchange (or LANX) which is capable of implementation as a distributed PABX telephone system and which can also function in both data switching and conventional local area network (LAN) type applications as well.

Hitherto, local area networks have been designed for computer applications which require a high throughput of "bursty" traffic and are therefore of comparatively high cost to manufacture. Thus although the concept of using such a local area network to implement a distributed PABX system is known, the relative cost of such implementation when compared to a conventional centralised switching approach is prohibitive. This prohibitive cost arises because the prior art LAN's were not designed with this distributed PABX function in mind and thus such local area networks would require considerable modification in order to be able to perform this function as required.

It is the object of the present invention to provide a local area network exchange which can function as a distributed PABX telephone system but can also function to perform both data switching and conventional local area network functions as well.

According to a first aspect of the present invention there is disclosed a local area network exchange comprising a twisted pair of wires extending between locations to be linked by said network, and a plurality of nodes located at spaced apart intervals around said twisted pair, each of said nodes comprising a connection to said twisted pair of a selected one of the members of the group consisting of telephone extensions, exchange private lines, single or multiple channel Integrated Services Digital Network (ISDN) interfaces, exchange PABX lines, tie lines, data interfaces and a gateway to a like local area network exchange; data and/or voice information being transmitted around said twisted pair by a sequence of frames each of substantially fixed duration and each comprising a predetermined number of channels, the information being sent or received via a particular node being caried by a given one of said channels during sequential frames for the duration of the information. If desired, a single twisted pair is provided to carry both information and power to the node devices. Alternatively, a second twisted pair can be provided to carry power only.

According to a second aspect of the present invention there is disclosed a contention mechanism for a local area network comprising a plurality of inter-connected nodes each of which has a unique address and in which information is transmitted and/or received via any one of said nodes via a selected one of a plurality of channels which form a frame, said information being carried by said one selected channel during sequential frames, said connection mechanism comprising the initial transmission by said one node of a seize signal comprising the binary encoded unique address of said node and the testing by each seize signal transmitting node during the times (if any) when its address is in one logical state for simultaneous seize signal transmissions of other nodes which then comprises the other logical state, and in the event of said test being successful and testing node discontinuing its seize signal transmission thereby allowing access to said network for each node with nodes being given preferential access in the event of substantially simultaneous requests for access based upon a hierarchy determined by the arithmetical value of said binary coded node addresses.

According to a third aspect of the present invention there is disclosed a system of group synchronisation for use in local area network exchanges in which a plurality of nodes communicate via substantially synchronous information transmission carried by a sequence of frames each of like duration wherein each node is provided with an accurate timing oscillator, each node transmitting information transmits frame synchronisation data at the commencement of each frame based upon the status of its timing oscillator and each receiving node has its timing oscillator re-set each frame by receipt of said frame synchronisation data, the re-setting tolerance of each note exceeding the expected propagation delay of said network, whereby all nodes transmitting or receiving are maintained substantially synchronised to the fastest one of the timing oscillators of said transmiting or receiving nodes.

One embodiment of the present invention will now be described with reference to the drawings in which:

Fig. 1 is a schematic representation of two local area network exchanges connected together,

Fig. 2 is a timing diagram illustrating the positions of the various channels and frame synchronising signal within the time allocated for a single frame,

Fig. 3 illustrates the frame synchronising signal,

Fig. 4 illustrates the seize signal,

Fig. 5 is a schematic block diagram of the interface required at each node of the LANX, and

Fig. 6 is a node schematic circuit diagram.

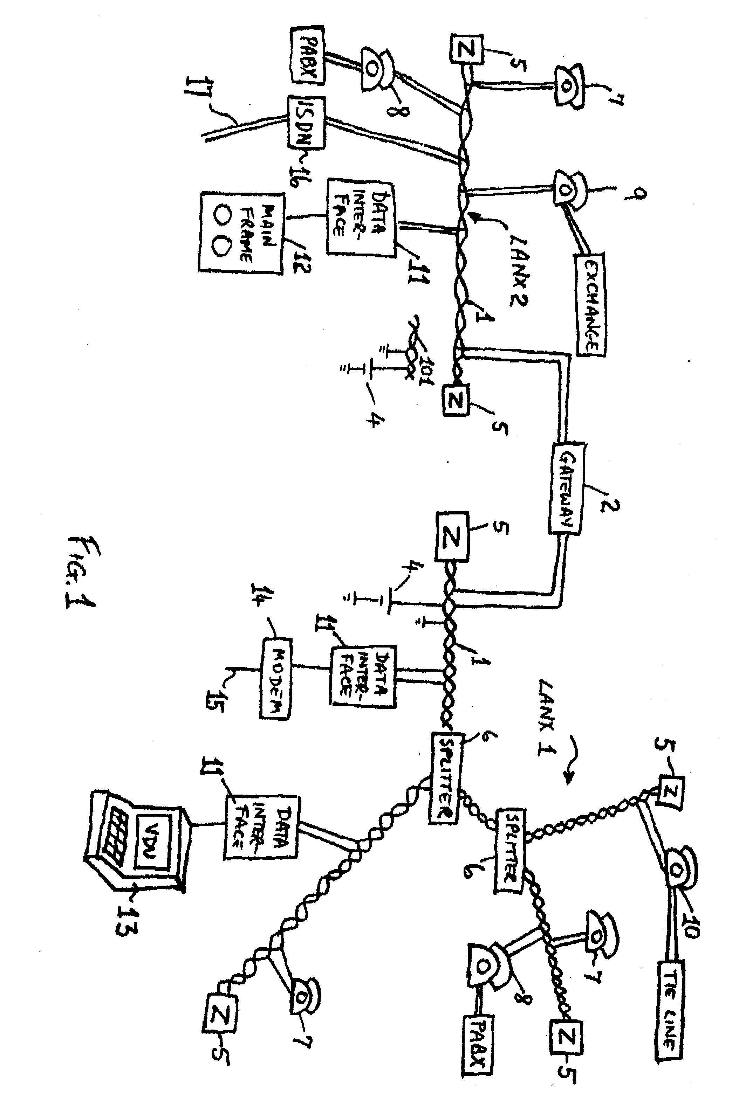

Turning now to Fig. 1 it will be seen that each local area network exchange (LANX) is formed from a first twisted pair of wires 1 which carry information. This pair 1 can also carry power from a dc source 4 as shown in LANX1 or, alternatively, power can be supplied by a second twisted pair 101 as shown in LANX2. The second twisted pair 101 extends to each location to which the twisted pair 1 of LANX2 extends. The cable limit is defined as the maximum cable distance between any two nodes in a LANX network and is approximately 300 meters. The cable ends of each LANX network must be terminated in an impedance 5 having the cable's characteristic impedance to prevent the disruptive effects of signal reflections.

Taps to the different LANX nodes do not require termination provided they are not longer than some nominal length corresponding to a certain amount of signal reflection.

Should a particular network topology require branches longer than this normal length, this can be provided by use of a splitter 6 as illustrated in LANX 1. The splitter 6 performs the function of cable impedance matching to prevent reflections with the disadvantage of loss of signal power through the splitter 6.

A LANX network can be formed into an indefinite variety of topologies by the use of splitters with correct termination on each branch or sub-network given the constraints of cable limit and sufficient signal power for correct functioning of the system. LANX1 represents a typical split topology while LANX2 represents a typical unsplit one.

Should the traffic requirements of a given system exceed the capabilities of a single LANX network, this situation can be satisfied by the use of two or more LANX systems connected by a gateway 2. The gateway 2 performs the function of switching channels through from one network to the other in either direction as required.

Located around a LANX network at any desired point are a number of nodes each of which can take the form of one of a number of extensions as in a conventional PABX system.

Thus at a given node there can be a telephone extension 7 or an exchange private line 9, an exchange PABX line 8, a tie line 10, a data interface 11 or a gateway 2 to a like LANX.

Thus, as seen in Fig. 1 two LANX's, LANX1 and LANX 2 are provided each having a network of twisted pair wires 1 which are interconnected by the gateway 2. In addition, a power pair 101 of twisted pair wires is also provided for LANX2 and supplied with a DC voltage (typically 50V) from a power supply 4.

Connected around the LANX's are telephone handsets 7, an exchange PABX line 8, an exchange private line 9, a tie line 10, or an ISDN interface (single or multi-channel) 16 is leading to ISDN lines 17. Furthermore, by use of suitable data interfaces 11, a main-frame computer 12, a VDU 13, or modem 14 leading to an exchange line 5, can all be provided and can communicate with each other.

Turning now to Figs. 2 and 3, communication on the LANX is by means of a frame which in the preferred embodiment is of 4 mS duration and is formed from 32 channels preceeded by a frame synchronising signal. The channel period is 123.4 microseconds and the data transmission encoding is by Manchester II at a bit rate of 2.69 M bits/sec.

Frame synchronisation is maintained by the use of the frame sync signal illustrated in Fig. 3. The frame sync period including guardbands is 51.2 microseconds. No other network signal looks like a frame sync signal. All the nodes on the network receive and synchronise to the frame sync signal and, in addition, any one, of all of, the nodes on the network can transmit the frame sync. As a consequence, the synchronisation can be regarded as a group synchronisation scheme. This scheme allows all nodes on the network to transmit and receive frame sync simultaneously. As a consequence, the survivability of frame sync on the network is ensured since failure of a signal source of frame sync (such as can occur with a specialised frame sync generator) cannot occur. Furthermore, complicated redundancy schemes required for such a signal source of frame sync are also not requried.

The group synchronisation scheme relies on the fact that each node in the network has an accurate crystal oscillator which will lead to a worst case timing slip in any one frame of only 0.4 microseconds (given a 100 PPM tolerance for the crystals). Any slip of this magnitude can easily be tolerated in the network timing.

The frame sync signal can be easily recognised and is used to synchronise each node by resetting a timing chain in each node which is used to derive the frame timing including the time of the next expected occurrance of the frame sync, the timing of the channel windows, and the synchronisation of codecs.

Since each node can generate the expected arrival time of the next frame sync signal and be within 0.4 microseconds of any other unit in the network for this estimation, if all modes transmit frame sync at the time they expect to see it, all of the transmitted frame syncs would coincide within 0.4 microseconds. However, since all nodes will synchronise to the first frame sync signal they see, this means the first frame sync signal resets the network. As a consequence, all nodes maintain frequency lock with the fastest node on the network. Clearly, there will be some jitter in this regard, however, this can be tolerated. In addition, the above explanation is complicated somewhat by propagation delays but is valid if one considers that each mode synchronises to what that particular node "sees". That is to say, propagation delays are built into the perceived mis-synchronisation which any given node "sees".

As it will be apparent from Fig. 2, each frame is divided into 32 equal discrete time intervals designated channels which preferably contain a fixed size transmission packet. Each transmission packet consists of two basic data fields, the first field dealing with messaging overhead, the other containing data (whether this be codec voice samples or other message data). The first field preferably contains a synchronisation preamble of one byte, a transmit identity of two bytes, a receive identity of two bytes and a status of two bytes.

The message data comprises 32 bytes and when voice samples are sent as data, the number of samples sent is the number of samples taken over a frame utilizing time compression multiplexing (TCM) in which one frame of samples is sent in one channel.

A certain amount of timing guardband is allowed in each channel (i.e. is a period when transmission is not allowed) in order to allow for delays that will occur due to the spacial distribution of the nodes in the network. If this timing guardband were not provided, overlapping transmissions could otherwise result as a consequence of propagation delays. The length of the timing guardband is determined by the maximum propagation delay which is proportional to the maximum allowable distance between any two nodes in the network.

It is highly desirable to provide for more extensions or nodes on the network than there are available channels since normal traffic requirements indicate that not all nodes will be in use simultaneously. In order to provide this blocking type PABX operation, a means of enabling the nodes to contend for available channels must be provided. Since the basic unit of communication bandwidth available to any node, is the channel, the node must contend for a channel before it can transmit in it. Naturally, the contention scheme prevents disturbance of already established transmission channels (since once a particular node starts transmission it will continue to use the same channel in successive sequential frames). In addition, the contention scheme also provides an orderly means of resolving between contending nodes based upon a predetermined hierarchy or priority.

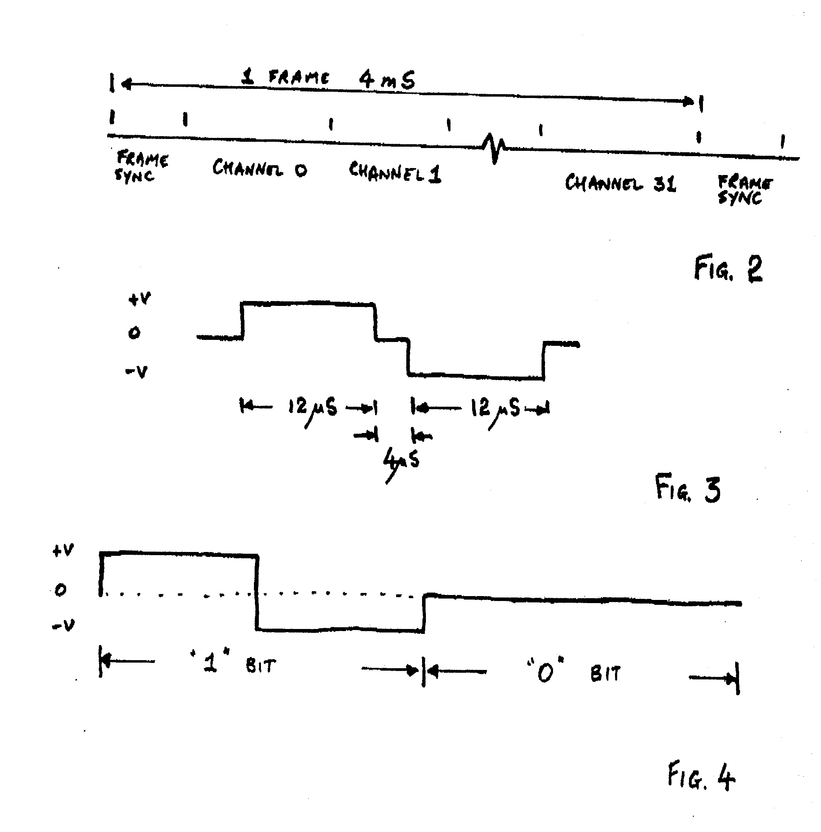

The contention scheme is based upon each node which has to contend for a channel, transmitting a seize signal in that channel. The seize signal is a special signal with the characteristic that is an encoded form of the address of the particular node, each node having a unique address. As indicated in Fig. 4, the logical one bit of the address is represented by the presence of energy (a positive voltage followed by a negative voltage) and the logical zero bit is represented by the absence of energy (ground or zero volts). Furthermore, each of the logical bits of the seize signal is significantly longer than the transmission guardband. In addition, transmission of the seize signal will not commence until after the start of a normal transmission window in a channel.

As a consequence, prior to the start of a seize signal transmission, the presence of energy in a channel can be detected by a node and the seize signal transmission abandoned thus preventing a collision with a channel in which a transmission is already established.

It sometimes happens that two or more nodes seek to simultaneously seize the same channel. In this event, the competition for the channel must be resolved and this is done utilizing the properties of the seize signal in the following manner. All the contending nodes commence transmission of their seize signal at substantially the same instant in the given channel and each node transmits energy for each logical one bit of its address. During the logical zero bit(s) of a given node's address, that node looks for the presence of energy on the network.

If energy is detected, for a period longer than the transmission guardband, this must mean that another node is attempting to seize the same channel. Furthermore, this other node must have a higher value node address since that node is now sending a logical 1 during the time when the first node is transmitting a logical 0. The first node construes this to means that its seize signal has been overruled by the seize signal of the other node which has a higher priority based upon its address. Thus the first node immediately terminates its seize signal transmission and the contention between these two nodes is resolved.

Should a large number of nodes simultaneously contend for a specific channel, the contention will be resolved bit by bit until the last remaining node which wins the seize attempt does so on the basis of the number of logical ones in its address (i.e. the arithmetical value of its address).

As a consequence of the above described arrangement, if a node has completed transmission of its entire seize signal, it can safely assume that it has won any contention that may have occurred for that channel and can therefore commence a normal transmission in that channel in the next frame. Nodes which fail or terminate their seize signal transmission can retry in other empty channels until eventually they are successful. It will be apparent to those skilled in the art that the bit period provided for the seize signal transmission, must be greater than the network propagation delay to ensure with absolute certainty that the contention will be resolved unambiguously.

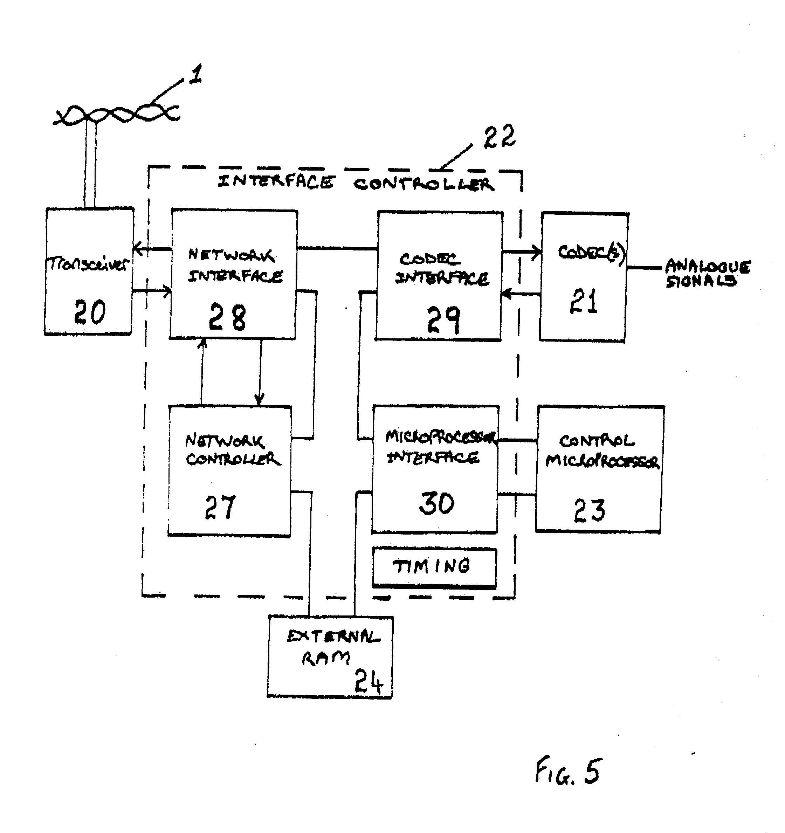

Turning now to Fig. 5, the component blocks of a typical node will now be described. Connected to the network itself is a substantially conventional transceiver 20 which communicates with a substantially conventional codec 21 via an interface controller 22 so that analogue signals recieved by the codec 21 can be transmitted over the network 1. Also connected to the interface controller 22 are a control micro-processor 23 and an external memory store 24 in the form of a random access memory.

The interface controller 22 is preferably realised on two chips using VLSI which is required since preferably all the electronics needed to implement the network interface and telephone functions must be contained within the case of the telephone handset. This provides a substantial limit as to size. The interface controller 22 comprises a timing circuit 26 which provides a common source for all the clocks required and takes the form of a network controller 27 and an separate interface 28, 29 and 30 respectively for each of the network, the codec and the microprocessor.

The network interface 28 performs the encoding and decoding required of the network data, and also carries out serial/parallel and parallel/serial conversion, ensures synchronisation to incoming data, the detection and generation of the frame sync, and the control of the seize signalling and contention. The network controller 27 is a "primitive" state machine controller which co-ordinates the network interface 28 to the bus-sequence data from the network interface 28 to and from channel buffers. In addition, the network controller 27 performs low level decision making such as whether to transmit, to transmit a seize signal, to receive, or do nothing and also logs the presence of interrupts to the microprocessor interface 30.

The codec interface 29 generates the necessary timing clocks for the codec 21 (or codecs), carries out serial/parallel or parallel/serial conversions, and transfers parallel codec data to and from the channel buffers.

The microprocessor interface 30 provides an interface to control registers and channel buffers allowing for global and channel specific control of the interface 30. In addition, the microprocessor interface 30 provides interrupt type monitoring of channel events as well as allowing polled type interrogation.

The external RAM 24 holds buffers of data associated with each channel on the network (either transmitted or received data) plus other housekeeping storage tasks for the network controller 27. The microprocessor 23 implements the intelligence for switching algorithms used on the network. The codec 21 is a substantially conventional PCM codec for digitisation of voice channels. The substantially conventional transceiver 20 performs the function of transmitting and receiving to and from the network 1 and including any level translation required.

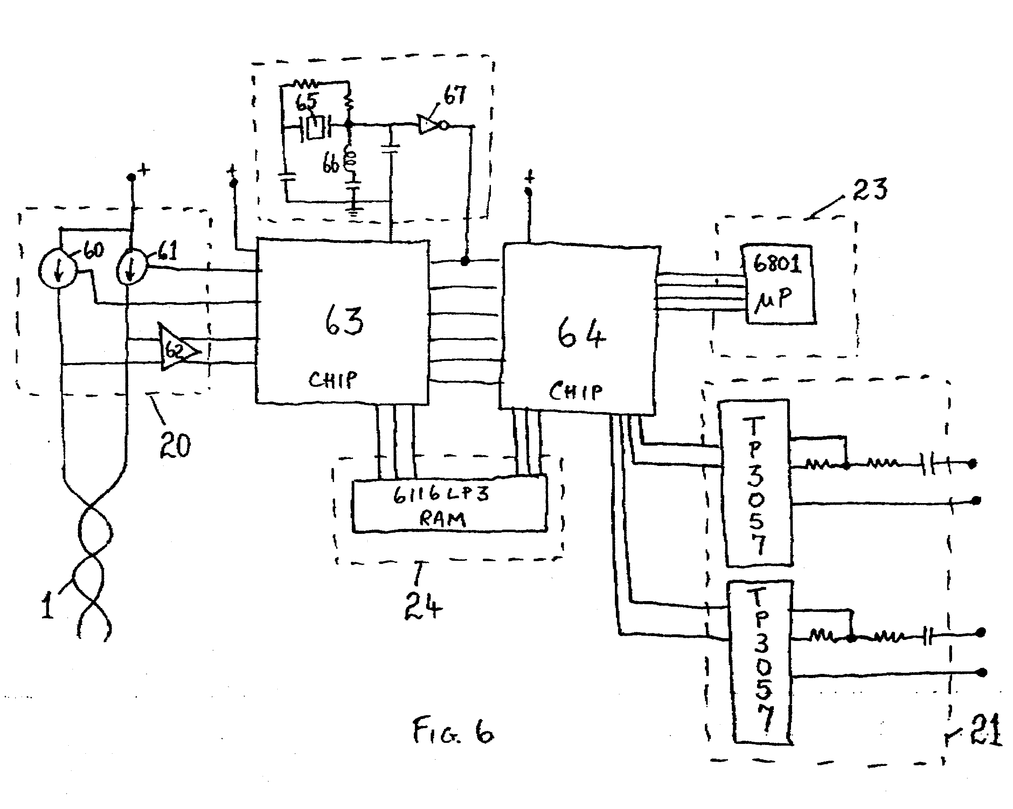

Turning now to Fig. 6, the preferred embodiment of the hardware used to release the functional blocks of Fig. 5 will now be described. The transceiver 20 is bidirectional and takes the form of a pair of current generators 60,61 and a differential operational amplifier 62. The transceiver 20 is connected to one of two semicustom CMOS gate array chips 63 and 64 manufactured by National Semiconductor with device numbers SCX6225 RGX and SCX 6225 SXE respectively.

Chip 63 implements both the network interface 28 and network controller 27 whilst chip 64 implements both the codec interface 29 and microprocessor interface 30. Chips 63 and 64 contain the channel buffers and the node address or identity is input to chip 64.

The timing circuit 26 of Fig. 5 is implemented by the crystal 65, coil 66 and inverter 67 together with associated resistors and capacitors which form a crystal controlled oscillator of substantially conventional configuration.

The random access memory 25 is released by a type 6116LP3 manufactured by Hitachi. This is a 2k byte RAM. The microprocessor 23 is any one of the type 5801 manufactured by Motorola. The microprocessor 23 operates in a multiplexed mode where the lower 8 bits of address are multiplexed with the data and is connected to chip 64 via a data and control bus.

The codec 21 takes the form of two codecs each of which is realised by a type TP 3057 integrated circuit manufactured by National Semiconductor. The two codecs provide two duplex (4 channel) conversation paths as required for those nodes (e.g . telephones) requiring both a local interface and an external interface such as an exchange line.

It will be apparent to those skilled in the art that the above described interface arrangement provides a number of substantial advantages. In particular, the control microprocessor 23 can determine the status of the entire network by examining any of the channel associated buffers and thus an effective memory map exists of all network transmissions in the last frame. Furthermore, control is substantially event driven so that the control microprocessor 23 is only given interrupts when required to perform some specific function.

There is also substantially fail safe implementation in that the interface hardware prevents a microprocessor in any one node which has gone "insane" from causing a network collapse in any of the following ways, by incoherent frame sync transmissions, by overriding established transmission channels, or by congesting the network.

The transmission of incoherent frame synchronisation is inhibited by the hardware until at least two frame periods have elapsed. This allows the nodes timing chain to synchronise to any incoming frame signals before a frame sync transmission is attempted. The hardware will not allow transmission in a channel unless it has been successfully seized and seizure will never override an established transmission channel. This prevents the overriding of established transmission channels. Finally, channel transmission must be maintained by "refreshing" every frame. A failure to refresh causes the loss of a channel for transmission and thus congestion of the network cannot result as a consquence of one node continuing to block a channel even though its transmission has ended.

The foregoing describes only one embodiment of the present invention and modifications, obvious to those skilled in the art, can be made thereto without departing from the scope of the present invention.

## Claims

1. A local area network exchange comprising a twisted pair of wires (1) extending between locations to be linked by said network, and a plurality of nodes located at spaced apart intervals around said twisted pair (1), each of said nodes comprising a connection to said twisted pair of a selected one of the members of the group consisting of telephone extensions (7), exchange private lines (9), single or multiple channel Integrated Services Digital Network (ISDN) interfaces (16), exchange PABX lines (8), tie lines (10), data interfaces (11) and a gateway (2) to a like local area network exchange, data and/or voice information being transmitted around said twisted pair (1) by a sequence of frames each of substantially fixed duration and each comprising a predetermined number of channels, the information being sent or received via a particular node being carried by a given one of said channels during sequential frames for the duration of the information.

2. A local area network exchange as claimed in claim 1 wherein said twisted pair of wires is terminated in an impedance (5) substantially equal to the characteristic impedance of said twisted pair of wires (1).

3. A local area network exchange as claimed in claim 1 or 2 wherein said twisted pair of wires (1) is formed into a number of branches each interconnected via a splitter (6).

4. A local area network exchange as claimed in any one or claims 1 to 3 and connected to a like local area network exchange via a gateway (2), each end of said gateway forming a node in the respective local area network exchange.

5. A local area network exchange as claimed in any one of claims 1 to 4 wherein said twisted pair of wires (1) carries both data and power to said nodes.

6. A local area network exchange as claimed in any one of claims 1 to 4 wherein a second twisted pair of wires (101) is provided alongside said twisted pair of wires, said second twisted pair carrying power to said nodes.

7. A contention mechanism for a local area network comprising a plurality of inter-connected nodes each of which has a unique address and in which information is transmitted and/or received via any one of said nodes via a selected one of a plurality of channels which form a frame, said information being carried by said one selected channel during sequential frames, said contention mechanism comprising the initial transmission by said one node of a seize signal comprising the binary encoded unique address of said node and the testing by each seize signal transmitting node during the times (if any) when its address is in one logical state for simultaneous seize signal transmissions of other nodes which then comprises the other logical state, and in the event of said test being successful and testing node discontinuing its seize signal transmission thereby allowing access to said network for each node with nodes being given preferential access in the event of substantially simultaneous requests for access based upon a hierarchy determined by the arithmetical value of said binary coded node addresses.

8. A contention mechanism as claimed in claim 7 wherein said one logical state comprises the absence of energy and said other logical state comprises the presence of energy.

9. A contention mechanism as claimed in claim 7 or 8 when used on a local area network exchange as claimed in claim 1.

10. A system of group synchronisation for use in local area network exchanges in which a plurality of nodes communicate via substantially synchronous information transmission carried by a sequence of frames each of like duration wherein each node is provided with an accurate timing oscillator, each node transmitting information transmits frame synchronisation data at the commencement of each frame based upon the status of its timing oscillator and each receiving node has its timing oscillator re-set each frame by receipt of said frame synchronisation data, the re-setting tolerance of each node exceeding the expected propagation delay of said network, whereby all nodes transmitting or receiving are maintained substantially synchronised to the fastest one of the timing oscillators of said transmitting or receiving nodes.

11. A system as claimed in claim 10 when used in a local area network exchange as claimed in claim 1.

FIG. 1

0269423

1 FRAME 4 mS

FRAME SYNC    CHANNEL 0    CHANNEL 1    CHANNEL 31    FRAME SYNC

FIG. 2

+V
0
-V

12 μS    12 μS

4μS

FIG. 3

+V
0
-V

'1' BIT    "0" BIT

FIG. 4

0269423

FIG. 5

Fig. 6